# EUROPEAN PATENT APPLICATION

(11) **EP 3 358 497 A1**
(43) Date of publication of application: **08.08.2018**
(21) Application number: 18151964.6
(22) Date of filing: 16.01.2018
(51) Int. Cl.: G06K 9/00

(54) **IMAGE PROCESSING APPARATUS AND IMAGE PROCESSING METHOD**

(30) Priority: 01.02.2017 JP 2017016676
(71) Applicant: KABUSHIKI KAISHA TOSHIBA, Minato-ku Tokyo 105-8001 (JP); Toshiba TEC Kabushiki Kaisha, Tokyo 141-8562 (JP)
(72) Inventor: TOKUDA, Satoshi, Shinagawa-ku, Tokyo 141-8562 (JP)
(74) Representative: Takeuchi, Maya

(57) **Abstract**

According to one embodiment, an image processing apparatus includes an acquisition unit that acquires original document image data, a communication interface that is disposed in order to communicate an external device which performs a first optical character recognition process on the original document image data, an optical character recognition processing unit that performs a second optical character recognition process which is a simpler process than the first optical character recognition process, and a controller that determines whether or not to perform the first optical character recognition process, based on a recognition result obtained by the second optical character recognition process, and that generates a document file by using at least any one of a result of the first optical character recognition process and a result of the second optical character recognition process in accordance with a determination result.

## Description

### FIELD

The present invention relates to the field of image processing technologies in general, and embodiments described herein relate more particularly to an image processing apparatus and an image processing method.

### BACKGROUND

An image processing apparatus performs printing in accordance with a printing request. The image processing apparatus forms an image on a feeder for feeding a paper sheet such as paper, and the paper sheet, and discharges the paper sheet having the image formed thereon. The image processing apparatus reads the paper sheet (original document) on which original document components such as characters and illustrations are printed, and forms image data (original document image data). The image processing apparatus analyzes a layout indicating a position of the original document components on the original document image data, and performs optical character recognition (OCR) process for recognizing the characters.

The accuracy of the OCR process varies depending on an algorithm for recognition. Therefore, in order to very accurately perform the OCR process, it is necessary to execute a high load algorithm. However, when the high load algorithm is executed in an image forming apparatus, a heavy load is applied to a CPU. Consequently, there is a possibility that various processes performed at the same time may be affected, or that a processing time may be prolonged.

Therefore, in the related art, an image processing apparatus is introduced which transmits acquired original document image data to a cloud server, which causes the cloud server to perform the OCR process using the high load algorithm, and which acquires a result of the OCR process from the cloud server. However, in some cases, the OCR process using the cloud server also has a possibility that the processing time may be prolonged, since processes are rushed all at once or the OCR process receives the influence of network line speed.

To solve such problems, there is provided an image processing apparatus comprising:
an acquisition unit configured to acquire original document image data;
a communication interface configured to communicate an external device which performs a first optical character recognition process on the original document image data;
an optical character recognition processing unit configured to perform a second optical character recognition process which is a simpler process than the first optical character recognition process; and
a controller configured to determine whether or not to perform the first optical character recognition process, based on a recognition result obtained by the second optical character recognition process, and configured to generate a document file by using at least any one of a result of the first optical character recognition process and a result of the second optical character recognition process in accordance with a determination result.

Preferably, the optical character recognition processing unit recognizes a layout of the original document image data in the second optical character recognition process, and
wherein the controller determines whether or not to perform the first optical character recognition process, based on a recognition result of the layout of the original document image data.

Preferably still, the controller recognizes the detection number of preset detection items, based on the recognition result of the layout of the original document image data which is obtained by the second optical character recognition process, and determines whether or not to perform the first optical character recognition process, based on the recognized detection number and a preset threshold.

Preferably yet, the detection items include any one or more of an illustration region, a character region, column settings, and a ruled line which does not match a grid in a table.

Preferably further, the controller determines whether or not to perform the first optical character recognition process, based on the detection number for each of the detection items and a threshold set for each of the detection items.

The invention also relates to an image processing method in an image processing apparatus comprising the steps of:
acquiring original document image data;
communicating an external device which performs a first optical character recognition process on the original document image data;
performing a second optical character recognition process which is a simpler process than the first optical character recognition process; and
determining whether or not to perform the first optical character recognition process, based on a recognition result obtained by the second optical character recognition process, and generating a document file by using at least any one of a result of the first optical character recognition process and a result of the second optical character recognition process in accordance with a determination result.

Suitably, the step of performing the optical character recognition comprises recognizing a layout of the original document image data in the second optical character recognition process, and
wherein the determining step comprises determining whether or not to perform the first optical character recognition process, based on a recognition result of the layout of the original document image data.

Suitably still, the method further comprises the step of recognizing
the detection number of preset detection items, based on the recognition result of the layout of the original document image data which is obtained by the second optical character recognition process, and determines whether or not to perform the first optical character recognition process, based on the recognized detection number and a preset threshold.

Suitably yet, the detection items include any one or more of an illustration region, a character region, column settings, and a ruled line which does not match a grid in a table.

Suitably further, the method further comprises the step of determining
whether or not to perform the first optical character recognition process, based on the detection number for each of the detection items and a threshold set for each of the detection items.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a view for describing a configuration example of an image processing apparatus according to a first embodiment.
FIG. 2 is a view for describing a configuration example of the image processing apparatus according to the first embodiment.
FIG. 3 is a view for describing an operation example of the image processing apparatus according to the first embodiment.
FIG. 4 is a view for describing an operation example of the image processing apparatus according to the first embodiment.
FIG. 5 is a view for describing an operation example of the image processing apparatus according to the first embodiment.
FIG. 6 is a view for describing an operation example of an image processing apparatus according to a second embodiment.

### DETAILED DESCRIPTION

An object of embodiments described herein is to provide an image processing apparatus or corresponding system, and an image processing method which can properly use a plurality of OCR processes.

In general, according to one embodiment, an image processing apparatus (or the corresponding image processing system, idem hereinafter) includes an acquisition unit configured to acquire original document image data, a communication interface configured to communicate an external device which performs a first optical character recognition process on the original document image data, an optical character recognition processing unit configured to perform a second optical character recognition process which is a simpler process than the first optical character recognition process, and a controller configured to determine whether or not to perform the first optical character recognition process, based on a recognition result obtained by the second optical character recognition process, and configured to generate a document file by using at least any one of a result of the first optical character recognition process and a result of the second optical character recognition process in accordance with a determination result.

Hereinafter, an image processing apparatus and an image processing method according to an embodiment will be described with reference to the drawings.

### First Embodiment

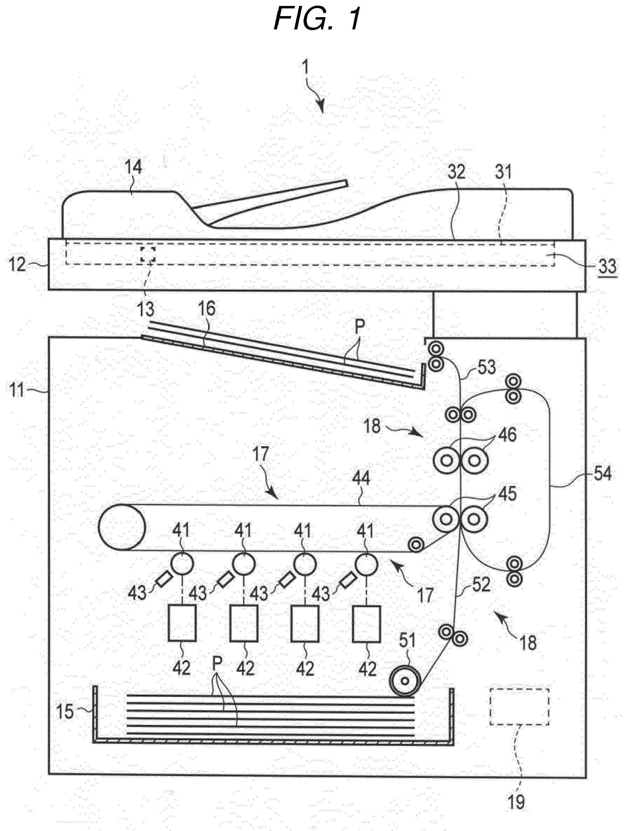

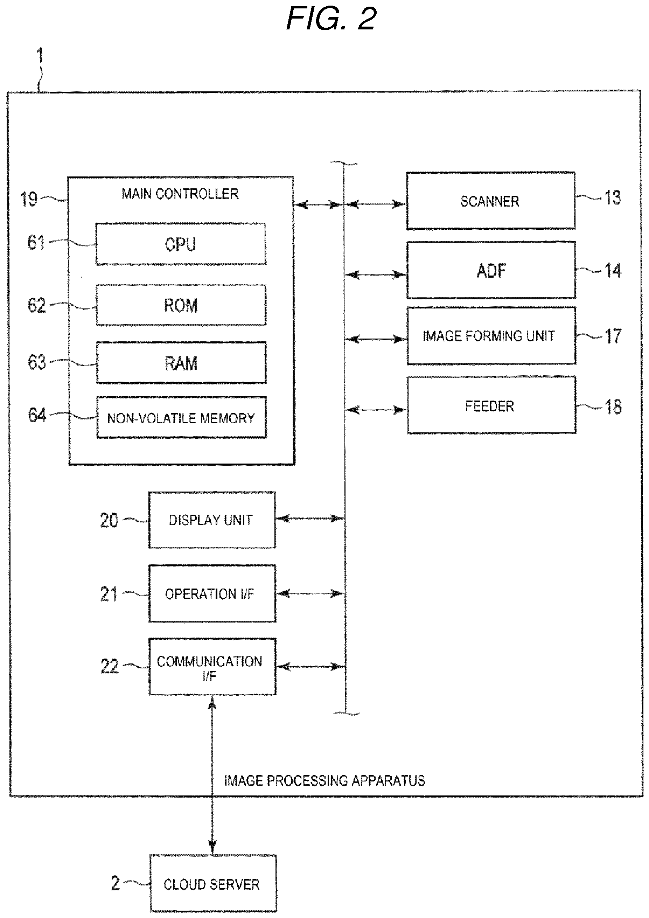

First, an image processing apparatus 1 according to a first embodiment will be described. FIG. 1 is a view for describing a configuration example of the image processing apparatus 1 according to the first embodiment. FIG. 2 is a block diagram in which functions provided for the image processing apparatus 1 are illustrated using blocks.

For example, the image processing apparatus 1 is a multiple function printer (MFP) which performs various processes such as an image forming process while feeding a recording medium such as a paper sheet. The image processing apparatus 1 charges a photoconductive drum, and emits light corresponding to image data for printing (print data) toward the photoconductive drum, thereby forming a latent image (electrostatic latent image) on the photoconductive drum. The image processing apparatus 1 attaches a toner (developing agent) to the latent image formed on the photoconductive drum, and transfers the toner attached to the latent image to the paper sheet, thereby forming a toner image on the paper sheet. The image processing apparatus 1 causes fixing rollers heated at a high temperature by a heater to nip the paper sheet having the toner image formed thereon, and fixes the toner image formed on the paper sheet.

The image processing apparatus 1 causes an image sensor to form an image by using reflected light of light emitted to the paper sheet, reads charges accumulated in the image sensor, and converts the charges into a digital signal, thereby acquiring an image of the paper sheet.

The image processing apparatus 1 communicates with an external device such as a cloud server 2 connected via a network. Accordingly, the image (original document image data) read from the paper sheet serving as original document including original document components such as characters and illustrations can be transmitted to the cloud server 2.

The cloud server 2 is an information processing apparatus including a CPU, a ROM, a RAM, a non-volatile memory, and a communication I/F. The cloud server 2 causes the CPU to execute a program stored in the ROM or the non-volatile memory, thereby performing an OCR process for recognizing a layout and characters of original document.

For example, when the cloud server 2 receives the original document image data from the image processing apparatus 1, the cloud server 2 analyzes the original document image data by performing the OCR process, and recognizes each of the layout indicating each position of the original document components on the original document image data and the characters in the original document image data. The cloud server 2 generates a document file, based on a recognition result of the recognized layout and characters. The cloud server 2 transmits the generated document file to the image processing apparatus 1.

In the document file, the original document components such as character data and the illustrations are arranged on a predefined region. More specifically, the document file is obtained using Word (registered trademark), Excel (registered trademark), or PowerPoint (registered trademark).

The image processing apparatus 1 includes a housing 11, a document placing table 12, the scanner 13, an automatic document feeder (ADF) 14, a paper feed cassette 15, a paper discharge tray 16, an image forming unit 17, a feeder 18, a main controller 19, a display unit 20, an operation I/F 21, and a communication I/F 22.

The housing 11 is a main body which holds the document placing table 12, the scanner 13, the ADF 14, the paper feed cassette 15, the paper discharge tray 16, the image forming unit 17, the feeder 18, the main controller 19, the display unit 20, the operation I/F 21, and the communication I/F 22.

A paper sheet P serving as original document is placed on the document placing table 12. The document placing table 12 has a glass plate 31 on which the paper sheet P serving as the original document is placed, and a space 33 located on a surface opposite to a document placing surface 32 on which the paper sheet P serving as the original document of the glass plate 31 is placed.

The ADF 14 is a mechanism for feeding the paper sheet P. The ADF 14 can be opened and closed on the document placing table 12. In accordance with the control of the main controller 19, the ADF 14 picks the paper sheet P placed on a tray, and feeds the picked paper sheet P while bringing the paper sheet P into close contact with the glass plate 31 of the document placing table 12.

In accordance with the control of the main controller 19, the scanner 13 acquires the image from the paper sheet P. The scanner 13 is disposed in the space 33 opposite to the document placing surface 32 of the document placing table 12. The scanner 13 includes an image sensor, an optical element, and a lighting lamp.

The image sensor is an imaging element in which pixels for converting light into an electric signal (image signal) are linearly arrayed. For example, the image sensor is configured to include a charge coupled device (CCD), a complementary metal oxide semiconductor (CMOS), or other imaging elements.

The optical element forms an image on the pixels of the image sensor by using the light from a predetermined reading range. The reading range of the optical element is a linear region on the document placing surface 32 of the document placing table 12. The optical element forms the image on the pixels of the image sensor by using the light which is reflected from the paper sheet P placed on the document placing surface 32 of the document placing table 12 and which is transmitted through the glass plate 31.

The lighting lamp emits the light to the paper sheet P. The lighting lamp includes a light source and a light guide which guides the light emitted from the light source to the paper sheet P. The lighting lamp causes the light guide to guide the light emitted from the light source to a region including the reading range of the optical element.

When the paper sheet P is placed on the document placing surface 32 of the document placing table 12, the scanner 13 is driven by a drive mechanism (not illustrated) in a sub scanning direction which is a direction orthogonal to an array direction (main scanning direction) of the pixels of the image sensor and parallel to the document placing surface 32. The scanner 13 is driven in the sub scanning direction, and causes the image sensor to continuously acquire the image line by line, thereby acquiring the whole image data (original document image data) of the paper sheet P placed on the document placing surface 32 of the document placing table 12.

When the paper sheet P is fed by the ADF 14, the scanner 13 is driven at a position where the paper sheet P is brought into close contact with the scanner 13 by the ADF 14. The scanner 13 causes the image sensor to continuously acquire the image line by line from the paper sheet P fed by the ADF 14, thereby acquiring the whole image data (original document image data) of the paper sheet P fed by the ADF 14.

The paper feed cassette 15 accommodates the paper sheet P. The paper feed cassette 15 is configured to be capable of supplying the paper sheet P from the outside of the housing 11. For example, the paper feed cassette 15 is configured to be drawable from the housing 11.

The paper discharge tray 16 supports the paper sheet P discharged from the image processing apparatus 1.

The image forming unit 17 forms an image on the paper sheet P, based on the control of the main controller 19. For example, the image forming unit 17 charges a drum, and forms a latent image corresponding to the image data for printing (print data) on the charged drum. The image forming unit 17 attaches a toner to the latent image formed on the drum, and transfers the toner attached to the latent image to the paper sheet P, thereby forming the image on the paper sheet P. For example, as illustrated in FIG. 1, the image forming unit 17 includes a drum 41, an exposure unit 42, a developer 43, a transfer belt 44, a pair of transfer rollers 45, and a pair of fixing rollers 46.

The drum 41 is a photoconductive drum formed in a cylindrical shape. The drum 41 is disposed so as to be in contact with the transfer belt 44. A surface of the drum 41 is uniformly charged by a charger (not illustrated). The drum 41 is rotated at constant speed by a drive mechanism (not illustrated).

The exposure unit 42 forms the electrostatic latent image on the charged drum 41. The exposure unit 42 causes a light emitting element to emit laser light to a surface of the drum 41 in accordance with the print data, thereby forming the electrostatic latent image on the surface of the drum 41. The exposure unit 42 includes a light emitting unit and an optical element.

The light emitting unit includes a configuration in which light emitting elements for emitting the light in response to an electric signal (image signal) are linearly arrayed. The light emitting element of the light emitting unit emits the light having a wavelength which enables the latent image to be formed on the charged drum 41. The light emitted from the light emitting unit is used by the optical element in order to form the image on the surface of the drum 41.

The developer 43 attaches a toner (developing agent) to the electrostatic latent image formed on the drum 41. In this manner, the developer 43 forms an image of the toner (toner image) on the surface of the drum 41.

For example, the drum 41, the exposure unit 42, and the developer 43 of the image forming unit 17 are disposed for each of different colors such as cyan, magenta, yellow, and black colors. In this case, a plurality of developers 43 hold the toners having respectively different colors.

The transfer belt 44 is a member for receiving the toner image formed on the surface of the drum 41 and transferring the toner image to the paper sheet P. The transfer belt 44 is moved by rotation of a roller. The transfer belt 44 receives the toner image formed on the drum 41 at a position where the transfer belt 44 is in contact with the drum 41, and delivers the received toner image to the pair of transfer rollers 45.

The pair of transfer rollers 45 is configured to nip the transfer belt 44 and the paper sheet P. The pair of transfer rollers 45 transfers the toner image on the transfer belt 44 to the paper sheet P.

The pair of fixing rollers 46 is configured to nip the paper sheet P. The pair of fixing rollers 46 is heated by a heater (not illustrated). In a heated state, the pair of fixing rollers 46 applies pressure to the nipped paper sheet P, thereby fixing the toner image formed on the paper sheet P. That is, the pair of fixing rollers 46 fixes the toner image, thereby forming the image on the paper sheet P.

The feeder 18 feeds the paper sheet P. The feeder 18 includes a feed path configured to include a plurality of guides and a plurality of rollers, and a sensor for detecting a feed position of the paper sheet P in the feed path. The feed path is a route through which the paper sheet P is fed. The feed roller is rotated by a motor operated based on the control of the main controller 19, thereby feeding the paper sheet P along the feed path. Some of the plurality of guides are rotated by a motor operated based on the control of the main controller 19, thereby switching the feed path for feeding the paper sheet P.

For example, as illustrated in FIG. 1, the feeder 18 includes a delivery roller 51, a paper feed path 52, a paper discharge path 53, and a reverse feed path 54.

The delivery roller 51 delivers the paper sheet P accommodated in the paper feed cassette 15 to the paper feed path 52.

The paper feed path 52 is disposed in order to feed the paper sheet P delivered from the paper feed cassette 15 by the delivery roller 51 to the image forming unit 17.

The paper discharge path 53 is disposed in order to discharge the paper sheet P on which the image is formed by the image forming unit 17 from the housing 11. The paper sheet P discharged by the paper discharge path 53 is discharged to the paper discharge tray 16.

The reverse feed path 54 is disposed in order to supply the paper sheet P to the image forming unit 17 again in a reversed state of the front and rear surfaces and the leading and trailing edges of the paper sheet P on which the image is formed by the image forming unit 17.

The main controller 19 controls the image processing apparatus 1. For example, the main controller 19 includes a CPU 61, a ROM 62, a RAM 63, and a non-volatile memory 64.

The CPU 61 is an arithmetic element (for example, a processor) which executes arithmetic processing. The CPU 61 performs various processes, based on data such as a program stored in the ROM 62. The CPU 61 executes the program stored in the ROM 62, thereby functioning as a controller which can perform various operations. The CPU 61 inputs the print data for forming the image on the paper sheet P to the image forming unit 17. The CPU 61 inputs a feed control signal for instructing the feeder 18 to feed the paper sheet P to the feeder 18. Compared to a CPU mounted on the cloud server 2, the CPU 61 is configured to have lower specifications. In this manner, the cost for the image processing apparatus 1 is minimized.

The ROM 62 is a non-volatile memory dedicated for reading. The ROM 62 stores a program and data used for the program.

The RAM 63 is a volatile memory functioning as a working memory. The RAM 63 temporarily stores data which is in the middle of the process of the CPU 61. The RAM 63 temporarily stores the program executed by the CPU 61.

The non-volatile memory 64 is a storage medium which can store various pieces of information. The non-volatile memory 64 stores a program and data used for the program. For example, the non-volatile memory 64 is a solid state drive (SSD), a hard disk drive (HDD), or the other storage device. Instead of the non-volatile memory 64, a memory I/F such as a card slot into which a storage medium such as a memory card can be inserted may be provided.

The display unit 20 displays a screen in response to a video signal input from the main controller 19 or a display controller such as a graphic controller (not illustrated). For example, the display unit 20 displays a screen for various settings of the image processing apparatus 1.

The operation I/F 21 is connected to an operation member (not illustrated). The operation I/F 21 supplies an operation signal according to the operation of the operation member to the main controller 19. For example, the operation member is a touch sensor, a ten key, a power key, a paper feed key, various function keys, or a keyboard. For example, the touch sensor is a resistive touch sensor or an electrostatic capacitive touch sensor. The touch sensor acquires information indicating a designated position inside a certain region. The touch sensor is configured to function as a touch panel formed integrally with the display unit 20. In this manner, a signal indicating a touched position on the screen displayed on the display unit 20 is input to the main controller 19.

The communication I/F 22 is disposed in order to communicate with other devices. For example, the communication I/F 22 is used in communicating with a higher rank device which transmits the print data to the image processing apparatus 1. The communication I/F 22 is used in communicating with the cloud server 2. For example, the communication I/F 22 is configured to include a LAN connector. The communication I/F 22 may perform wireless communication with other devices in accordance with a standard such as Bluetooth (registered trademark) or Wi-fi (registered trademark). Next, the OCR process will be described.

The CPU 61 executes the program stored in the ROM 62 or the non-volatile memory 64, thereby controlling the scanner 13 to read the image. In this manner, the CPU 61 acquires the original document image data from the paper sheet P (original document) on which characters and illustrations are printed. The CPU 61 performs the OCR process on the original document image data. In this manner, the CPU 61 recognizes the characters included in the original document image data. The CPU 61 analyzes (recognizes) a layout indicating a position in the original document image data of the original document components such as the characters and the illustrations which are included in the original document image data. That is, the CPU 61 functions as an optical character recognition processing unit which performs an internal OCR process.

For example, the CPU 61 recognizes the characters from the original document image data. The CPU 61 determines a region where the characters are recognized in the original document image data, as a character region. When an interval between the character regions is smaller than a predetermined value, the CPU 61 recognizes the character regions as the same character region. That is, when the interval between the character regions is equal to or greater than the predetermined value, the CPU 61 recognizes the character regions as different character regions. The predetermined value may be a previously set value, or may be determined depending on a size of the recognized characters.

For example, the CPU 61 may be configured to detect column settings in accordance with the array of the character regions recognized from the original document image data. The column settings are those in which sentences are adjacent to each other with a predetermined interval. That is, when the CPU 61 recognizes a plurality of adjacent character regions, the CPU 61 determines that the column settings are present.

The CPU 61 may be configured to detect a region into which a table is inserted by recognizing a ruled line in the original document image data. For example, the CPU 61 determines a region where the ruled line is formed in a grid shape, as the region into which the table is inserted. The CPU 61 may detect the number of ruled lines which do not match the grids by comparing the ruled lines and the grids which are recognized. In this manner, the CPU 61 can detect whether the table has a portion from which the ruled line is deleted or whether the table is obtained by a plurality of combined tables.

For example, the CPU 61 detects a region in which the characters are not recognized in the original document image data and which has any symbol. The CPU 61 determines the region in which the characters are not recognized in the original document image data and which has any symbol, as an illustration region in which the illustrations are printed.

Based on an analysis result of the layout and a recognition result of the characters, the CPU 61 generates a document file. In the document file, the original document components such as the character data and the illustrations are arranged on a predefined region. More specifically, the document file is obtained using Word (registered trademark), Excel (registered trademark), or PowerPoint (registered trademark). The CPU 61 can generate a file (for example, PDF (registered trademark)) in which a transparent text generated based on a character recognition result is pasted on the image. However, hereinafter, an example of generating the above-described document file will be described.

The CPU 61 arranges the character data which shows the recognition result of the characters, and the illustrations at a position corresponding to the analysis result of the layout on the document file. For example, the CPU 61 arranges the character regions on the document file, based on the analysis result of the layout. The CPU 61 arranges the character data recognized from the original document image data corresponding to the character region, in the character region on the document file. Based on the analysis result of the layout, the CPU 61 arranges the illustration regions on the document file. The CPU 61 arranges illustration image data extracted from the original document image data corresponding to the illustration region, in the illustration region on the document file. Through the above-described processes, the CPU 61 generates the document file for one page. When the original document image data is present for a plurality of pages, the CPU 61 generates the document file for each page through the above-described procedures, combines the plurality of document files with each other, and generates the document file having the plurality of pages. The CPU 61 may be configured to generate the document file having the plurality of pages by performing the above-described procedures for each page.

The CPU 61 can cause the cloud server 2 to perform the OCR process. When the cloud server 2 is caused to perform the OCR process, the CPU 61 transmits the original document image data and a request for the OCR process to the cloud server 2. The CPU 61 receives a response to the request from the cloud server 2. The response includes the document file which is a processing result of the OCR process performed in the cloud server 2. That is, the CPU 61 transmits the request including the original document image data to the cloud server 2, thereby receiving the response including the document file which is the processing result of the OCR process. Hereinafter, the OCR process performed in the cloud server 2 is referred to as a cloud OCR process (first optical character recognition process), and the OCR process performed in the image processing apparatus 1 is referred to as an internal OCR process (second optical character recognition process).

In the internal OCR process, an analysis is performed using a low load algorithm (simplified algorithm), compared to the cloud OCR process. In other words, in the cloud OCR process, an analysis is performed using a high load algorithm which enables very accurate recognition. In general, the internal OCR process which is further simplified than the cloud OCR process tends to have lower accuracy in the analysis result of the layout compared to the cloud OCR process, when a plurality of illustration regions are present, when a plurality of character regions are present, when the column settings are present, or when the table is detected and a plurality of ruled lines which do not match the grids are present.

Based on the analysis result of the layout in the internal OCR process, the CPU 61 determines to employ any one between the processing result of the internal OCR process and the processing result of the cloud OCR process. That is, based on the recognition result obtained by the second optical character recognition process, the CPU 61 determines whether or not to perform the first optical character recognition process in the cloud server 2. The CPU 61 employs the cloud OCR process, when the analysis result of the layout in the internal OCR process satisfies a predetermined condition.

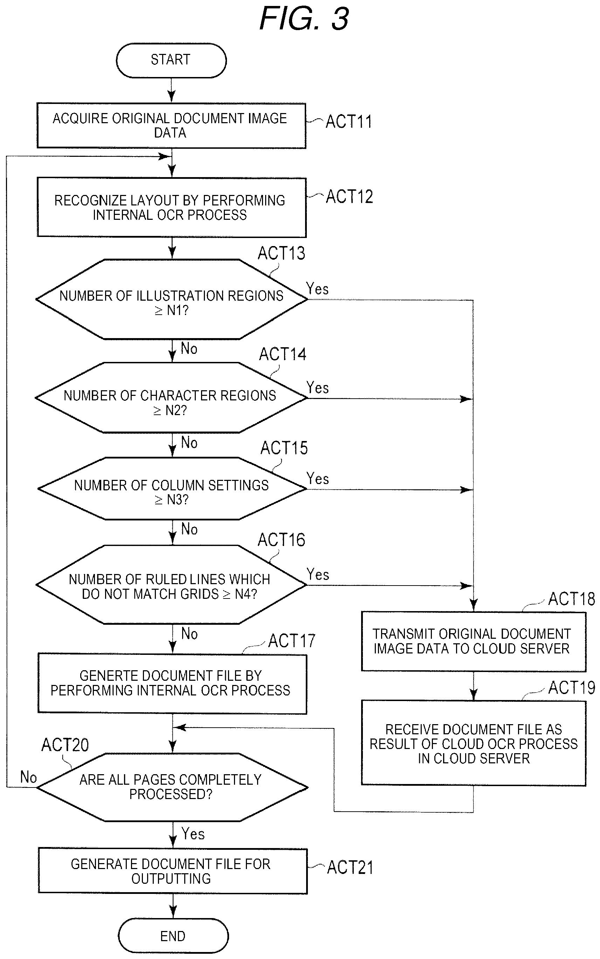

FIG. 3 is a view for describing the process of the CPU 61 when the OCR process is performed.

First, the CPU 61 controls the scanner 13 and the ADF 14, and acquires the original document image data from the paper sheet P (ACT 11). When the plurality of paper sheets P are present, the CPU 61 acquires a plurality of original document image data items corresponding to the plurality of pages. The CPU 61 recognizes the number of original document image data items, that is, the number of pages. The CPU 61 may be configured to acquire the original document image data via the communication I/F 22.

The CPU 61 performs the internal OCR process on one original document image data item, and analyzes the layout of the original document image data item (ACT 12). For example, when the plurality of original document image data items are present, the CPU 61 acquires one of the plurality of original document image data items, and performs the internal OCR process on the acquired original document image data item. In this manner, the CPU 61 recognizes each of the number of character regions, the number of column settings, the number of illustration regions, and the number of ruled lines which do not match the grids in the table in the original document image data item.

Based on the analysis result of the layout, the CPU 61 determines whether or not the number of illustration regions is equal to or greater than a preset first threshold N1 (ACT 13).

When it is determined that the number of illustration regions is not equal to or greater than the preset first threshold N1 (ACT 13, NO), based on the analysis result of the layout, the CPU 61 determines whether or not the number of character regions is equal to or greater than a preset second threshold N2 (ACT 14).

When it is determined that the number of character regions is not equal to or greater than the preset second threshold N2 (ACT 14, NO), based on the analysis result of the layout, the CPU 61 determines whether or not the number of column settings is equal to or greater than a preset third threshold N3 (ACT 15).

When it is determined that the number of column settings is not equal to or greater than the preset third threshold N3 (ACT 15, NO), based on the analysis result of the layout, the CPU 61 determines whether or not the number of ruled lines in which the table is detected and which do not match the grids is equal to or greater than a preset fourth threshold N4 (ACT 16).

When it is determined that the table is not detected or that the number of ruled lines which do not match the grids is not equal to or greater than the preset fourth threshold N4 (ACT 16, NO), based on the analysis result of the layout in the internal OCR process and the recognition result of the characters, the CPU 61 generates the document file (ACT 17), and the process proceeds to ACT 20. In this manner, the CPU 61 generates the document file for one page.

When it is determined that the number of illustration regions is equal to or greater than the preset first threshold N1 (ACT 13, YES), when it is determined that the number of character regions is equal to or greater than the preset second threshold N2 (ACT 14, YES), when it is determined that the number of column settings is equal to or greater than the preset third threshold N3 (ACT 15, YES), or when it is determined that the table is detected or that the number of ruled lines which do not match the grids is equal to or greater than the preset fourth threshold N4 (ACT 16, YES), the CPU 61 transmits the original document image data to the cloud server 2 in order to cause the cloud server 2 to perform the cloud OCR process (ACT 18). When the table is detected and there is a color (for example, color except for the background color) on the background of the table, the CPU 61 may determine that the cloud server 2 has to perform the cloud OCR process.

When the cloud server 2 receives the original document image data from the image processing apparatus 1, the cloud server 2 recognizes the characters, and analyzes the layout from the received original document image data. Based on the recognition result of the characters and the analysis result of the layout, the cloud server 2 generates the document file. The cloud server 2 transmits the generated document file to the image processing apparatus 1.

The CPU 61 of the image processing apparatus 1 receives the document file generated in the cloud server 2 (ACT 19), and the process proceeds to ACT 20. For example, the CPU 61 transmits a command including the original document image data to the cloud server 2, and receives the document file as a response thereto.

The CPU 61 determines whether or not all pages are completely processed (ACT 20). That is, the CPU 61 determines whether or not the OCR process is completely performed on the original document image data for the number of pages recognized in ACT 11.

When it is determined that all pages are not completely processed (ACT 20, NO), the CPU 61 proceeds to the process in ACT 12. In this manner, the CPU 61 performs the process on the subsequent original document image data.

When it is determined that all pages are completely processed (ACT 20, YES), the CPU 61 generates a document file for outputting (ACT 21). For example, the CPU 61 integrates the document files for the number of pages recognized in ACT 11, and generates one document file. That is, the CPU 61 generates one document file through concatenation by arraying the document file generated in the internal OCR process and the document file generated in the cloud OCR process in the order of pages at the time of reading.

The CPU 61 causes the non-volatile memory 64 to store the generated document file. The CPU 61 may be configured to transmit the generated document file to an external device via the communication I/F 22.

As described above, the image processing apparatus 1 is internally provided with a function to perform the internal OCR process for analyzing the layout and recognizing the characters of the original document image data, and a function to cause the cloud server 2 to perform the cloud OCR process which is more accurate than the internal OCR process by transmitting the original document image data to the cloud server 2. The CPU 61 of the image processing apparatus 1 acquires the original document image data generated by reading the paper sheet P including the plurality of original document components, and analyzes the layout of the acquired original document image data. Based on the analysis result of the layout, the CPU 61 determines whether to generate the document file of the original document image data by performing the internal OCR process or whether to generate the document file of the original document image data by performing the cloud OCR process. In accordance with the determination result, the CPU 61 generates the document file for one page by performing any one of the internal OCR process and the cloud OCR process. That is, in accordance with the determination result, the CPU 61 generates the document file for one page by using at least any one of the internal OCR process and the cloud OCR process. The CPU 61 generates one document file by integrating the document files for the plurality of pages.

In this configuration, for example, when the layout of the original document image data enables the document file to be sufficiently accurately generated by performing the internal OCR process, the image processing apparatus 1 generates the document file by performing the internal OCR process. In this manner, the image processing apparatus 1 can minimize the cost, and can quickly generate the document file. In the above-described configuration, for example, when the layout of the original document image data is less likely to be used in generating sufficiently accurate document file compared to the internal OCR process, the image processing apparatus 1 generates the document file by performing the cloud OCR process. In this manner, the image processing apparatus 1 can generate the document file whose layout is very accurately analyzed. That is, in accordance with the layout of the original document image data, the image processing apparatus 1 properly uses the internal OCR process and the cloud OCR process. Accordingly, it is possible to compatibly achieve reduced cost, high speed, and high accuracy.

When the plurality of illustration regions are present, when the plurality of character regions are present, when the column settings are present, or when the table is detected and the plurality of ruled lines which do not match the grids are present, the image processing apparatus 1 determines that the document file is less likely to be sufficiently accurately generated by performing the internal OCR process. According to this configuration, when the layout of the original document image data is complicated, the image processing apparatus 1 can generate the document file by performing the cloud OCR process, and when the layout of the original document image data is simple, the image processing apparatus 1 can generate the document file by performing the internal OCR process. As a result, the image processing apparatus 1 can compatibly achieve the reduced cost, the high speed, and the high accuracy.

The image processing apparatus 1 may be configured to have a memory which has settings (OCR settings) whether to give priority to the internal OCR process, whether to give priority to the cloud OCR process, or whether to switch between the internal OCR process and the cloud OCR process in accordance with the layout of the original document image data. For example, the image processing apparatus 1 has the OCR settings inside the non-volatile memory 64. The CPU 61 may be configured to change the OCR settings in accordance with the operation signal input via the operation I/F 21 or the control signal input via the communication I/F 22.

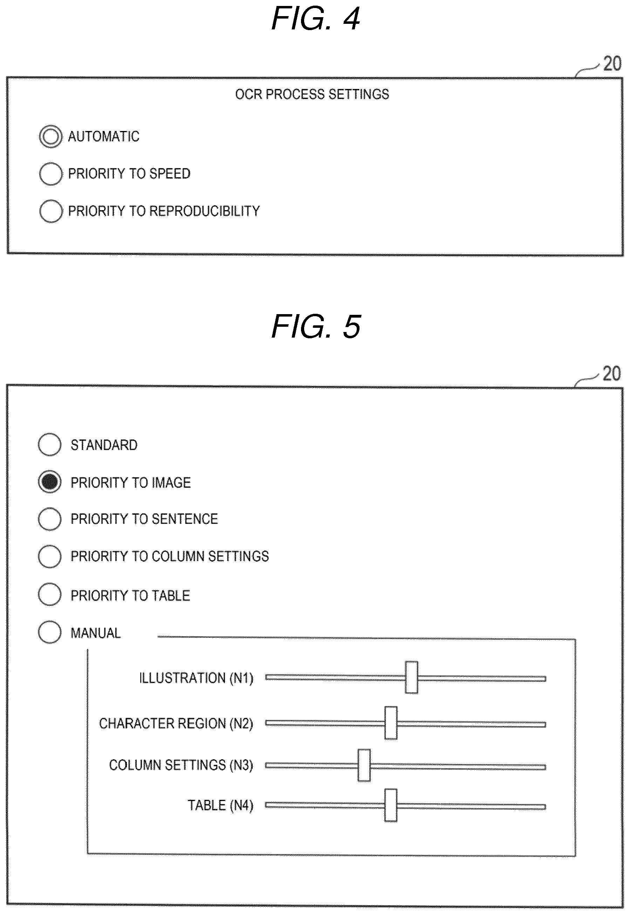

FIG. 4 is a view for describing an example of the OCR settings. For example, the OCR settings have setting items such as "automatic", "priority to speed", and "priority to reproducibility". In an example in FIG. 4, "automatic" is selected. For example, when "automatic" is selected as the OCR settings, the CPU 61 switches between the internal OCR process and the cloud OCR process in accordance with the layout of the original document image data. For example, when "priority to speed" is selected as the OCR settings, the CPU 61 generates the document file from the original document image data by performing the internal OCR process without depending on the layout of the original document image data. For example, when "priority to reproducibility" is selected as the OCR settings, the CPU 61 generates the document file from the original document image data by performing the cloud OCR process without depending on the layout of the original document image data.

Furthermore, the image processing apparatus 1 may be configured to have a plurality of patterns which have combined values such as the first threshold N1, the second threshold N2, the third threshold N3, and the fourth threshold N4 when "automatic" is selected as the OCR setting.

FIG. 5 illustrates an example of the patterns having the combined values of the first threshold N1, the second threshold N2, the third threshold N3, and the fourth threshold N4. For example, the combined patterns in the example in FIG. 5 include "standard", "priority to image", "priority to sentence", "priority to column settings", priority to table", and "manual". The CPU 61 may be configured to change the combined patterns in accordance with the operation signal input via the operation I/F 21 or the control signal input via the communication I/F 22. For example, "priority to image" is selected in the example in FIG. 5. The CPU 61 performs the process in FIG. 3 by using the first threshold N1 to the fourth threshold N4 which correspond to the selected combined patterns.

In the combined pattern of "standard", the first threshold N1 to the fourth threshold N4 are set based on a predetermined reference. In the combined pattern of "priority to image", the first threshold N1 which is a threshold relating to the image is weighted (set lower) compared to "standard". In the combined pattern of "priority to sentence", the second threshold N2 which is a threshold relating to the number of character regions is weighted (set lower) compared to "standard". In the combined pattern of "priority to column settings", the third threshold N3 which is a threshold relating to the column settings is weighted (set lower) compared to "standard". In the combined pattern of "priority to table", the fourth threshold N4 which is a threshold relating to the table is weighted (set lower) compared to "standard".

The setting of "manual" is made in order to perform the process in FIG. 3 by using the first threshold N1 to the fourth threshold N4 which are set in accordance with the operation signal input via the operation I/F 21 or the control signal input via the communication I/F 22. The example in FIG. 5 illustrates a slider for changing each of the first threshold N1 to the fourth threshold N4 in setting "manual". For example, when "manual" is set, the CPU 61 changes each of the first threshold N1 to the fourth threshold N4 in response to the operation of the slider in FIG. 5.

As described above, after the values of the first threshold N1 to the fourth threshold N4 are changed in accordance with the operation or the input from the outside, the process in FIG. 3 is performed. Accordingly, the image processing apparatus 1 can properly use the internal OCR process and the cloud OCR process according to a user's intention.

The image processing apparatus 1 may be configured to automatically change the values of the first threshold N1 to the fourth threshold N4 in accordance with the result of the process in FIG. 3. For example, the CPU 61 counts the number of times that the cloud OCR process is determined to be used, in a storage region of the non-volatile memory 64. Specifically, the CPU 61 counts the number of times that the cloud OCR process is determined to be used, for each of the determination items such as the number of illustration regions, the number of character regions, the number of column settings, the number of ruled lines which do not meet the grids in the table. When the frequency of determining to use the cloud OCR process is equal to or greater than a predetermined value, the CPU 61 increases a value of the corresponding threshold. For example, when the frequency of determining that the number of illustration regions is equal to or greater than the first threshold N1 exceeds Y-times during the latest processes performed X-times, the CPU 61 may be configured to increase the first threshold N1 as much as Z. According to this configuration, it is possible to minimize the frequency of selecting the cloud OCR process.

When the frequency of determining not to use the cloud OCR process is equal to or greater than a predetermined value, the CPU 61 may be configured to decrease a value of the corresponding threshold. For example, when the frequency of determining that the number of illustration regions is smaller than the first threshold N1 exceeds Y-times during the latest processes performed X-times, the CPU 61 may be configured to decrease the first threshold N1 as much as Z. According to this configuration, it is possible to improve accuracy by increasing the frequency of selecting the cloud OCR process.

When the frequency of determining to use the cloud OCR process is equal to or greater than a predetermined value, the CPU 61 may be configured to increase a value of the corresponding threshold. When the frequency of determining not to use the cloud OCR process is equal to or greater than a predetermined value, the CPU may be configured to decrease a value of the corresponding threshold. According to this configuration, it is possible to maintain a proper frequency of selecting the cloud OCR process.

The CPU 61 of the image processing apparatus 1 may be configured so that the process in ACT 12 of FIG. 3, that is, the internal OCR process on the original document image data is performed multiple times. The CPU 61 may be configured to compare the results of the internal OCR processes performed multiple times with each other, and to determine whether or not to perform the cloud OCR process in accordance with the comparison result. Variations in the results of the internal OCR processes performed multiple times indicate that the layout cannot be sufficiently accurately analyzed by performing the internal OCR process. Therefore, when the results of the internal OCR processes performed multiple times are compared with each other and the comparison results are not coincident with each other, or when the comparison results are different from each other more than a predetermined value, the CPU 61 may be configured to determine to perform the cloud OCR process.

In the above-described embodiment, a configuration has been described in which the CPU 61 determines whether to use the internal OCR process or whether to use the cloud OCR process for each original document image data item, that is, for each page. However, the embodiment is not limited to this configuration. The CPU 61 may be configured to determine whether to use the internal OCR process or whether to use the cloud OCR process for each of the plurality of original document image data items.

The CPU 61 may adopt the following configuration. Communication speed of the line connected to the cloud server 2 is measured, and a time required for the cloud OCR process is estimated in accordance with the measurement result so as to determine whether to use the internal OCR process or whether to use the cloud OCR process in accordance with the estimated time.

The CPU 61 may be configured to determine whether to use the internal OCR process or whether to use the cloud OCR process in accordance with a time zone.

The CPU 61 may be configured to recognize a language of the characters included in the original document image data by performing the internal OCR process, and to determine whether to use the internal OCR process or whether to use the cloud OCR process in accordance with the recognition result of the language.

### Second Embodiment

In the first embodiment, a configuration has been described in which the CPU 61 compares the number of illustration regions, the number of character regions, the number of column settings, and the number of ruled lines which do not match the grids in the table, with the respectively corresponding thresholds so as to determine whether to use the internal OCR process or whether to use the cloud OCR process. However, the embodiment is not limited to this configuration. According to a second embodiment, a configuration may be adopted in which the CPU 61 compares the detection number of a plurality of items such as the number of illustration regions, the number of character regions, the number of column settings, and the number of ruled lines which do not match the grids in the table, with one preset threshold so as to determine whether to use the internal OCR process or whether to use the cloud OCR process. The second embodiment has a configuration in which an operation of the CPU 61 is different from that according to the first embodiment, and thus, description of the configuration will be omitted.

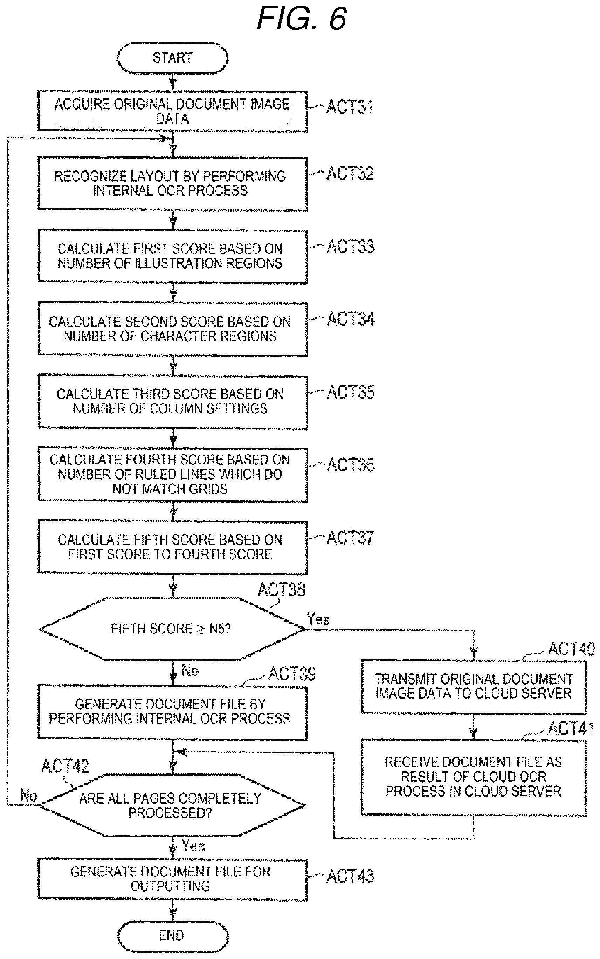

FIG. 6 is a view for describing the operation of the CPU 61 according to the second embodiment.

First, the CPU 61 controls the scanner 13 and the ADF 14, and acquires the original document image data from the paper sheet P (ACT 31). The CPU 61 may be configured to acquire the original document image data via the communication I/F 22.

The CPU 61 performs the internal OCR process on one original document image data item, and analyzes the layout of the original document image data item (ACT 32). In this manner, the CPU 61 recognizes each of the number of character regions, the number of column settings, the number of illustration regions, and the number of ruled lines which do not match the grids in the table in the original document image data item.

Based on the analysis result of the layout, the CPU 61 calculates a first score based on the number of illustration regions (ACT 33). For example, the CPU 61 calculates the first score in such a way that the number of illustration regions is multiplied by a preset first coefficient.

Next, based on the analysis result of the layout, the CPU 61 calculates a second score based on the number of character regions (ACT 34). For example, the CPU 61 calculates the second score in such a way that the number of character regions is multiplied by a preset second coefficient.

Next, based on the analysis result of the layout, the CPU 61 calculates a third score based on the number of column settings (ACT 35). For example, the CPU 61 calculates the third score in such a way that the number of column settings is multiplied by a preset third coefficient.

Next, based on the analysis result of the layout, the CPU 61 calculates a fourth score based on the number of ruled lines in which the table is detected and which do not match the grids (ACT 36). For example, the CPU 61 calculates the fourth score in such a way that the number of ruled lines which do not match the grids in the table is multiplied by a preset fourth coefficient.

The CPU 61 calculates a fifth score based on the first score to the fourth score (ACT 37). For example, the CPU 61 calculates a sum or a product of the first score to the fourth score as the fifth score.

The CPU 61 compares the fifth score with a preset fifth threshold N5, and determines to generate the document file by performing any one of the internal OCR process and the cloud OCR process in accordance with the comparison result (ACT 38).

For example, when the fifth score is not equal to or greater than the preset fifth threshold N5 (ACT 38, NO), the CPU 61 generates the document file, based on the analysis result of the layout and the recognition result of the characters in the internal OCR process (ACT 39), and the process proceeds to ACT 42. In this manner, the CPU 61 generates the document file for one page.

For example, when the fifth score is equal to or greater than the preset fifth threshold N5 (ACT 38, YES), the CPU 61 transmits the original document image data to the cloud server 2 in order to cause the cloud server 2 to perform the cloud OCR process (ACT 40).

When the cloud server 2 receives the original document image data from the image processing apparatus 1, the cloud server 2 performs the character recognition and the layout analysis on the received original document image data. Based on a result of the character recognition and the layout analysis, the cloud server 2 generates the document file. The cloud server 2 transmits the generated document file to the image processing apparatus 1.

The CPU 61 of the image processing apparatus 1 receives the document file generated in the cloud server 2 (ACT 41), and the process proceeds to ACT 42. For example, the CPU 61 transmits a command including the original document image data to the cloud server 2, and receives the document file as a response thereto.

The CPU 61 determines whether or not all pages are completely processed (ACT 42). That is, the CPU 61 determines whether or not the OCR process is completely performed on the original document image data for the number of pages recognized in ACT 31.

When it is determined that all pages are not completely processed (ACT 42, NO), the CPU 61 proceeds to the process in ACT 32. In this manner, the CPU 61 performs the process on the subsequent original document image data.

When it is determined that all pages are completely processed (ACT 42, YES), the CPU 61 generates a document file for outputting (ACT 43). For example, the CPU 61 integrates the document files for the number of pages recognized in ACT 31, and generates one document file. That is, the CPU 61 generates one document file through concatenation by arraying the document file generated in the internal OCR process and the document file generated in the cloud OCR process in the order of pages at the time of reading.

The CPU 61 causes the non-volatile memory 64 to store the generated document file. The CPU 61 may be configured to transmit the generated document file to an external device via the communication I/F 22.

According to this configuration, the CPU 61 can determine whether to use the internal OCR process or whether to use the cloud OCR process by integrating the plurality of items such as the number of illustration regions, the number of character regions, the number of column settings, and the number of ruled lines which do not match the grids in the table. As a result, it is possible to improve accuracy in determining whether to use the internal OCR process or whether to use the cloud OCR process.

According to this configuration, the CPU 61 individually sets each value of the first coefficient to the fourth coefficient in accordance with the operation signal input via the operation I/F 21 or the control signal input via the communication I/F 22. In this manner, it is possible to set an item to be emphasized among the number of illustration regions, the number of character regions, the number of column settings, and the number of ruled lines which do not match the grids in the table.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An image processing apparatus comprising:
an acquisition unit configured to acquire original document image data;
a communication interface configured to communicate an external device which performs a first optical character recognition process on the original document image data;
an optical character recognition processing unit configured to perform a second optical character recognition process which is a simpler process than the first optical character recognition process; and
a controller configured to determine whether or not to perform the first optical character recognition process, based on a recognition result obtained by the second optical character recognition process, and configured to generate a document file by using at least any one of a result of the first optical character recognition process and a result of the second optical character recognition process in accordance with a determination result.

2. The apparatus according to claim 1,
wherein the optical character recognition processing unit recognizes a layout of the original document image data in the second optical character recognition process, and
wherein the controller determines whether or not to perform the first optical character recognition process, based on a recognition result of the layout of the original document image data.

3. The apparatus according to claim 1 or 2,
wherein the controller recognizes the detection number of preset detection items, based on the recognition result of the layout of the original document image data which is obtained by the second optical character recognition process, and determines whether or not to perform the first optical character recognition process, based on the recognized detection number and a preset threshold.

4. The apparatus according to claim 3,
wherein the detection items include any one or more of an illustration region, a character region, column settings, and a ruled line which does not match a grid in a table.

5. The apparatus according to claim 3 or 4,
wherein the controller determines whether or not to perform the first optical character recognition process, based on the detection number for each of the detection items and a threshold set for each of the detection items.

6. An image processing method in an image processing apparatus comprising the steps of:
acquiring original document image data;
communicating an external device which performs a first optical character recognition process on the original document image data;
performing a second optical character recognition process which is a simpler process than the first optical character recognition process; and
determining whether or not to perform the first optical character recognition process, based on a recognition result obtained by the second optical character recognition process, and generating a document file by using at least any one of a result of the first optical character recognition process and a result of the second optical character recognition process in accordance with a determination result.

7. The image processing method according to claim 6,
wherein the step of performing the optical character recognition comprises recognizing a layout of the original document image data in the second optical character recognition process, and
wherein the determining step comprises determining whether or not to perform the first optical character recognition process, based on a recognition result of the layout of the original document image data.

8. The image processing method according to claim 6 or 7, the method further comprising the step of recognizing
the detection number of preset detection items, based on the recognition result of the layout of the original document image data which is obtained by the second optical character recognition process, and determines whether or not to perform the first optical character recognition process, based on the recognized detection number and a preset threshold.

9. The image processing method according to claim 8,
wherein the detection items include any one or more of an illustration region, a character region, column settings, and a ruled line which does not match a grid in a table.

10. The image processing method according to claim 8 or 9, the method further comprising the step of determining
whether or not to perform the first optical character recognition process, based on the detection number for each of the detection items and a threshold set for each of the detection items.
